# EUROPEAN PATENT APPLICATION

(11) **EP 2 034 753 A1**
(43) Date of publication of application: **11.03.2009**
(21) Application number: 07745531.9
(22) Date of filing: 13.06.2007
(51) Int. Cl.: H04Q 7/22

(54) **HANDOVER METHOD IN MOBILE TELEPHONE NETWORK**

(30) Priority: 15.06.2006 GB 0611838
(71) Applicant: NEC Corporation, Minato-ku Tokyo 108-8001 (JP)
(72) Inventor: VACHHANI, Ajay, Reading, Berkshire RG20TD (GB); FINDLAY, Stuart, Reading, Berkshire RG20TD (GB)
(74) Representative: Glawe, Delfs, Moll
(86) International application number: PCT/JP2007/062364
(87) International publication number: WO 2007/145367

(57) **Abstract**

The invention provides for a handover method for use in relation to a mobile radio communications device arranged for communication with an access service gateway by way of an eNodeB arrangement and comprising the steps of, subsequent to the receipt of a handover request at the mobile radio communications device from a eNodeB, delivering a handover indication message to the access service gateway and prior to completion of the handover, the handover indication serving to prevent transmission of downlink data from the access service gateway and at least until further eNodeB messaging is received, and the invention also providing for a related mobile radio communication network arrangement and a eNodeB arrangement.

## Description

This application claims priority to prior application UK 0611838.4, the disclosure of which is incorporated herein by reference.

### Technical Field

The present invention relates to handover procedures within a mobile radio communications device network and, in particular, to a handover method, a network arrangement for operating in accordance with such a method, and an evolved NodeB (eNodeB) provided within the network.

### Background Art

Within the various specifications offered as part of the ongoing 3GPP (3rd Generation Partnership Project) discussions, various contributions have been made on the subject of intra LTE (Long Term Evolution) mobility and including eNodeB handover procedures and which have encompassed data forwarding between source and target eNodeBs for both uplink (UL) and downlink (DL) data traffic.

It has been identified however that disadvantages can be associated with the duration of the data forwarding that is experienced between the source and target eNodeBs and also since a requirement arises for re-ordering of the data, at least at Service Data Unit (SDU) level within the target eNodeB.

### Disclosure of Invention

The present invention seeks to provide for a mobile radio communications network related mythology and eNodeB arrangement having advantages over known such networks, methods and arrangements.

According to a first aspect of the present invention there is provided a handover method for use in relation to a mobile radio communications device arranged for communication with an access service gateway by way of an eNodeB arrangement and comprising the steps of:
subsequent to the receipt of a handover request at the mobile radio communications device from an eNodeB, delivering a handover indication message to the access service gateway and prior to completion of the handover,
the handover indication serving to prevent transmission of downlink data from the access service gateway until further eNobeB messaging is received.

The invention proves advantageous in that through use of the early handover indication message provided to the access service gateway of the network, the data forwarding overhead experienced by the eNodeB arrangement can be advantageously reduced and the requirement for the re-ordering functionality mentioned above can be removed.

In one particular embodiment, the access service gateway can comprise a mobile management entity (MME) and/or a user-plane entity (UPE). It should be appreciated that the eNodeB arrangement advantageously comprises a source eNodeB and a target eNodeB.

In this manner, the handover request received at the mobile radio communications device is provided by the source eNodeB.

Also, the completion of the handover is indicated by confirmation provided from the mobile radio communications device to the target eNodeB.

Yet further, the further eNodeB messaging can comprise a handover failure indication message, subsequent to handover failure messaging originating from the mobile radio communications device for updating of the access service gateway.

According to another aspect of the present invention, there is provided a mobile radio communications network arrangement for communication between a mobile radio communications device and an access service gateway of the network by way of an eNodeB arrangement, the network arrangement including means for delivering a handover indication message to the access service gateway subsequent to receipt of a handover request at the mobile radio communications device from an eNodeB and prior to completion of the handover, wherein the handover indication is arranged to prevent transmission of downlink data from the access service gateway until further eNodeB messaging is received.

Advantageously, the network arrangement includes an access service gateway comprising either a mobile management entity and/or a user plane entity.

The eNodeB arrangement can comprise a source eNodeB and a target eNodeB. In this manner, the handover request received at the mobile radio communications device is delivered from the source eNodeB.

Yet further, and as above, completion of the handover is arranged to be indicated by a confirmatory signal from the mobile radio communications device to the target eNodeB.

Also, within the mobile radio communications network arrangement, the further messaging to be provided by the eNodeB can comprise a handover failure indication, or messaging from the mobile radio communications device seeking to update the access service gateway.

With regard to a yet further aspect of the present invention, there is provided an eNodeB arrangement for communication between the mobile radio communications device and an access service gateway within a mobile radio communications network, the eNodeB arrangement being arranged to deliver a handover request to the mobile radio communications device and subsequently a handover indication message to the access service gateway and prior to completion of the handover, wherein the handover indication serves to prevent transmission of downlink data from the access service gateway until further eNodeB messaging is received.

As before, the access service gateway can comprise a mobile management entity and/or a user plane entity and the eNodeB arrangement can comprise a source eNodeB and a target eNodeB. In particular, the source eNodeB is arranged to deliver the handover request to a mobile radio communications device.

Yet further, the target eNodeB is arranged to receive a confirmatory signal from the mobile radio communications device indicating the completion of the handover.

Also, the eNodeB is arranged so as to provide the further messaging as a handover failure indication message subsequent to handover failure messaging from the mobile radio communications device serving to update the access service gateway.

As will therefore be appreciated, the present invention provides for an early handover indication message to the network and which advantageously serves to shorten the data forwarding duration between the source and target eNodeBs that might otherwise arise, and also advantageously serves to avoid the need for re-ordering that otherwise arises within the target eNodeB.

### Brief Description of the Drawings

Fig. 1 is a message sequence chart showing a handover procedure in accordance with the current state of the art; and
Fig. 2 is a similar message sequence chart but illustrating the handover procedure according to an embodiment of the present invention.

### Best Mode for Carrying out the Invention

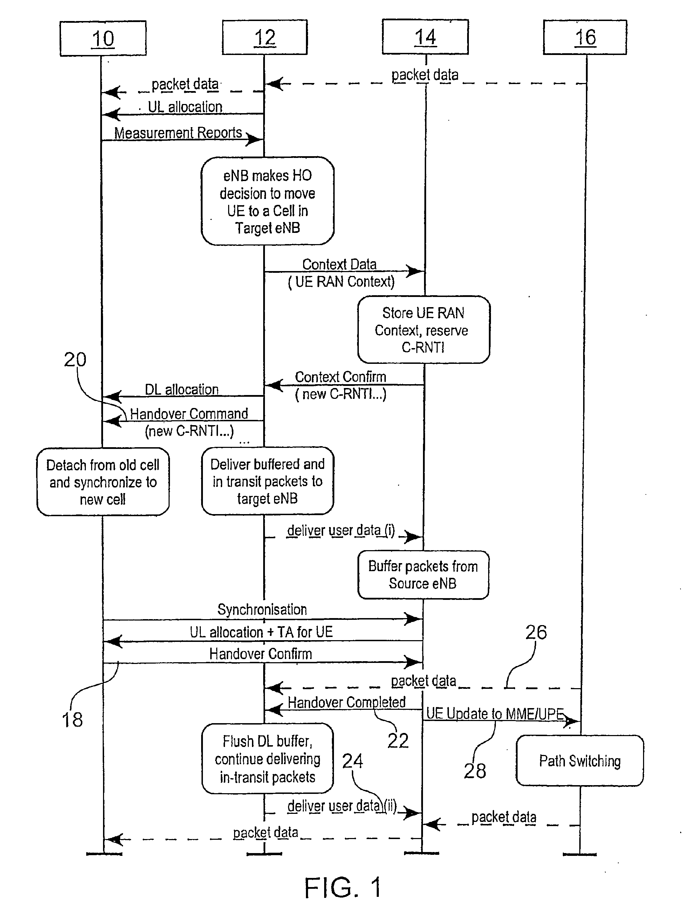

Turning first to Fig. 1, further details of current state of the art are described.

As noted, Fig. 1 comprises a message sequence chart illustrating the signaling and data transfer between a mobile radio communications device 10, a source eNodeB 12, a target eNodeB 14 and, in this embodiment, access service gateway 16 comprising a mobile management entity and a user plane entity.

As will be appreciated from Fig. 1, the access service gateway 16 receives no information concerning the handover situation until the target eNodeB 14 receives a handover confirmation signal 18 delivered from the mobile radio communications device 10. As will also be appreciated, from the time when the source eNodeB 12 sends a handover command (request) signal 20 to the mobile radio communications device 10, until receipt of a handover completion signal 22 at the source eNodeB 12, the access service gateway 16 continues to transmit data in a downlink direction (an arrow 26 in Fig. 1). Such data is buffered within the source eNodeB 12 (B1 in Fig. 1) and is continuously forwarded to the target eNodeB 14 (an arrow 24 in Fig. 1).

In view of such ongoing forwarding and buffering of the data, re-ordering is required at least within the target eNodeB 14 at SDU level.

In accordance with the present invention it has been found that these features can prove disadvantageously limiting since, in view of the continuous data forwarding between the source eNodeB 12 and the target eNodeB 14, the overall data forwarding duration is longer and can prove disadvantageously long and have a limiting effect on overall transmission capacity. Also, specific re-ordering functionality is required within the target eNodeB and this requires an unnecessary level of functionality.

Within Fig. 1, the ongoing signaling, and data signaling from the access service gateway and data forwarding, is illustrated by arrows 26, 24 and the first messaging received at the access service gateway 16 comprises an update message [UE (User Element) update to MME/UPE] from the mobile radio communications device to the access service gateway indicated by arrow 28.

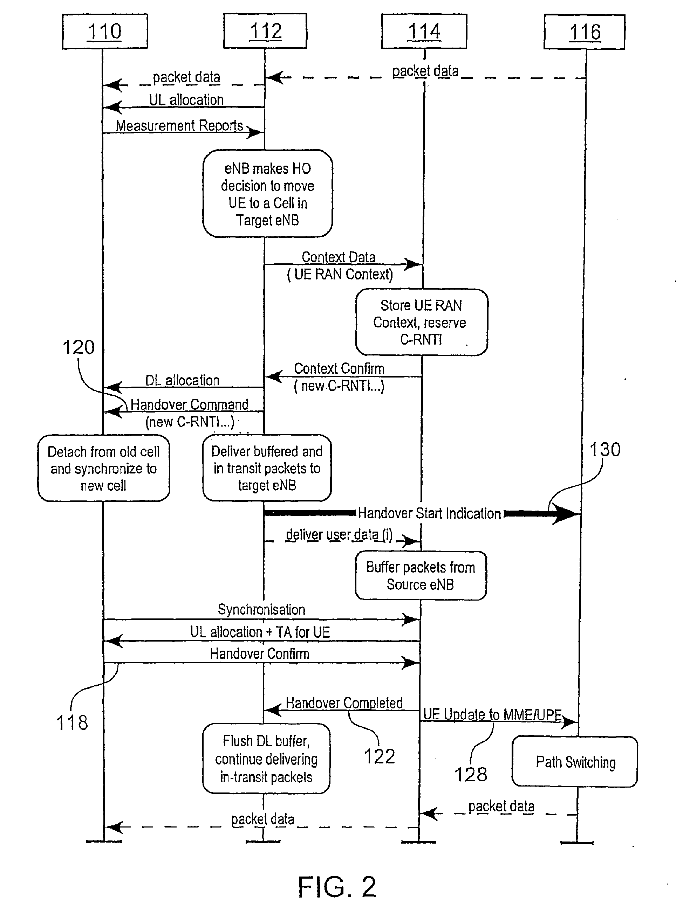

Turning now to Fig. 2, there is illustrated a similar message sequence chart 110, a source eNodeB 112, a target eNodeB 114 and an access service gateway 116.

As with the current state of the art indicated with reference to Fig. 1, a handover command (request) signal 120 is again delivered from the source eNodeB 112 to mobile radio communications device 110, the handover confirmation signal 118 is again delivered from the mobile radio communications device 110 to the target eNodeB 114 and a handover completion signal 122 is again delivered from the target eNodeB 114 to the source eNodeB 112 with a mobile radio communications device update signal 128 again being delivered at the end of the procedure to the access service gateway 116.

However, importantly, within the illustrated embodiment of the present invention, the signaling 128 is not the first indication that the access service gateway 116 receives concerning the handover procedure.

Rather a specific handover start indication (handover indication) signal 130 is delivered from the source eNodeB 112 to the access service gateway 116 at a time subsequent to the delivery of the handover command 120 from the source eNodeB 112 to the mobile radio communications device 110 and, according to the illustrated embodiment, in good time before the handover completion signals 122, 128.

The functionality attached to the handover start indication signal 130 is to advantageously prevent any downlink traffic from the access service gateway 116 so as to decrease the signaling overhead discussed above, and likewise overcome the requirement for the reordering functionality within the target eNodeB 114. Such improvements are illustrated by the absence of user data signaling equivalent to the signals 24, 26 illustrated in connection with Fig. 1.

As noted, upon receipt of the handover start indication signal 130, the access service gateway 116 is advantageously arranged to stop sending any further downlink data. In what might be considered a normal scenario, the access service gateway 116 continues to receive the update signal 128 from the target eNodeB 114. However, in a so called abnormal scenario, the access service gateway 116 can be arranged to receive a handover failure indication message (not shown) from the source eNodeB 112.

If it is found that a handover fails, the target eNodeB 114 can simply discard all of the previously forwarded data.

The early handover indication provided to the access service gateway in accordance with the present invention therefore advantageously serves to overcome limitations that have been identified within the current state of the art.

## Claims

1. A handover method for use in relation to a mobile radio communications device arranged for communication with an access service gateway by way of an eNodeB arrangement and comprising:
subsequent to the receipt of a handover request at the mobile radio communications device from an eNodeB, delivering a handover indication message to the access service gateway and prior to completion of the handover,
the handover indication serving to prevent transmission of downlink data from the access service gateway and at least until further eNobeB messaging is received.

2. A method as claimed in Claim 1, wherein the access service gateway comprises a mobile management entity and/or a user plane entity.

3. A method as claimed in Claim 1 or 2, wherein the eNodeB arrangement comprises a source eNodeB and a target eNodeB.

4. A method as claimed in Claim 3, wherein the handover request received at the mobile radio communications device is provided by the source eNodeB.

5. A method as claimed in Claim 3 or 4, wherein the completion of the handover is indicated by confirmation provided from the mobile radio communications device to the target eNodeB.

6. A method as claimed in any one of Claims 1 to 5, wherein said further eNodeB messaging comprises a handover failure indication message, subsequent to handover failure messaging originating from the mobile radio communications device for updating of the access service gateway.

7. A mobile radio communications network arrangement for communication between a mobile radio communications device and an access service gateway of the network by way of an eNodeB arrangement, the network arrangement including means for delivering a handover indication message to the access service gateway subsequent to receipt of a handover request at the mobile radio communications device from an eNodeB and prior to completion of the handover, wherein the handover indication is arranged to prevent transmission of downlink data from the access service gateway at least until further eNodeB messaging is received.

8. A network arrangement as claimed in Claim 7 and including an access service gateway comprising either a mobile management entity and/or a user plane entity.

9. A network arrangement as claimed in Claim 7 or 8, wherein the eNodeB arrangement comprises a source eNodeB and a target eNodeB.

10. A network arrangement as claimed in Claim 9, wherein the handover request received at the mobile radio communications device is delivered from the source eNodeB.

11. A network arrangement as claimed in Claim 9 or 10, wherein completion of the handover is arranged to be indicated by a confirmatory signal from the mobile radio communications device to the target eNodeB.

12. A network arrangement as claimed in any one of Claims 7 to 11, wherein the further messaging to be provided by the eNodeB comprises a handover failure indication, subsequent to handover failure messaging from the mobile radio communications device seeking to update the access service gateway.

13. An eNodeB arrangement for communication between a mobile radio communications device and an access service gateway within a mobile radio communications network, the eNodeB arrangement being arranged to deliver a handover request to the mobile radio communications device and subsequently a handover indication message to the access service gateway and prior to completion of the handover, wherein the handover indication serves to prevent transmission of downlink data from the access service gateway and at least until further eNodeB messaging is received.

14. An eNodeB arrangement as claimed in Claim 13, wherein the access service gateway comprises a mobile management entity and/or a user plane entity.

15. An eNodeB arrangement as claimed in Claim 13 or 14 and comprising a source eNodeB and a target eNodeB.

16. An eNodeB arrangement as claimed in Claim 15, wherein the source eNodeB is arranged to deliver a handover request to a mobile radio communications device.

17. An eNodeB arrangement as claimed in Claim 15 or 16, wherein the target eNodeB is arranged to receive a confirmatory signal from the mobile radio communications device indicating the completion of the handover.

18. An eNodeB arrangement as claimed in any one of Claims 13 to 17 and arranged so as to provide the further messaging as a handover failure indication message subsequent to handover failure messaging from the mobile radio communications device serving to update the access service gateway.
